# EUROPEAN PATENT APPLICATION

(11) **EP 4 696 404 A1**
(43) Date of publication of application: **18.02.2026**
(21) Application number: 24788539.5
(22) Date of filing: 22.03.2024
(51) Int. Cl.: B01D 71/70, B01D 69/10, B01D 69/12, B01D 71/02, B01D 71/62, C08G 77/26, C08L 83/08

(54) **SEPARATION MEMBRANE AND METHOD FOR PRODUCING SAME**

(30) Priority: 12.04.2023 JP 2023064810
(71) Applicant: Hiroshima University, Higashihiroshima-shi Hiroshima 739-8511 (JP); SHIN-ETSU CHEMICAL CO., LTD., Tokyo 1000005 (JP)
(72) Inventor: ANGGARINI, Ufafa, Higashihiroshima-shi, Hiroshima 739-8511 (JP); TSURU, Toshinori, Higashihiroshima-shi, Hiroshima 739-8511 (JP); KANEZASHI, Masakoto, Higashihiroshima-shi, Hiroshima 739-8511 (JP); NAGASAWA, Hiroki, Higashihiroshima-shi, Hiroshima 739-8511 (JP); TAKAGI, Kazunori, Annaka-shi, Gunma 379-0224 (JP); YAMADA, Tetsuro, Annaka-shi, Gunma 379-0224 (JP); HIROKAMI, Munenao, Annaka-shi, Gunma 379-0224 (JP); ICHIROKU, Nobuhiro, Tokyo 100-0005 (JP)
(74) Representative: Mewburn Ellis LLP
(86) International application number: PCT/JP2024/011183
(87) International publication number: WO 2024/214509

(57) **Abstract**

The present invention provides a separation membrane which comprises a separation layer that has an amorphous structure and contains: (A) a polymer that has an isocyanuric acid skeleton and a siloxane bond, and is obtained by polymerizing, for example, a precursor that contains a compound represented by general formula (1); and (B) a metal ion. 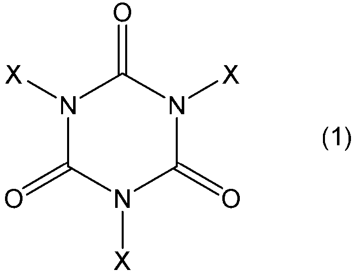 (In the formula, X moieties each independently represent a group represented by formula (2) or a monovalent hydrocarbon group having 1 to 8 carbon atoms, and at least one of the X moieties represents a group represented by formula (2).) 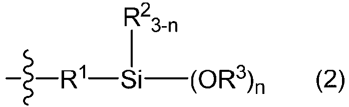 (In the formula, R¹ moiety represents an alkylene group having 1 to 8 carbon atoms, R² moieties each independently represent a monovalent hydrocarbon group having 1 to 8 carbon atoms, R³ moiety represents a hydrogen atom or an alkyl group having 1 to 4 carbon atoms, and n represents an integer of 1 to 3. The line accompanied by a wiggly line indicates an atomic bond.)

## Description

### TECHNICAL FIELD

The present invention relates to a separation membrane and a method for producing the same.

### BACKGROUND ART

Separation techniques that use a porous separation membrane are inexpensive and have a high separation ability compared with such techniques as filtration, evaporation, crystallization, solvent extraction and distillation. A porous separation membrane separates a target substance by means of molecular sieving.

Silicon-based materials have excellent mechanical strength, heat resistance and chemical stability, and are used as materials for porous inorganic separation membranes. However, when a silicon-based material is used as a separation membrane material, pore densification arises under high-temperature steam conditions, lowering the permeability of the separation member. To reduce such densification, separation membranes having a separation layer in which the silicon-based material is doped with metal ions have been developed (Patent Document 1).

With regard to carbon dioxide (CO₂) recovery and storage technology that uses silicon-based materials, separation membranes which have a separation layer made of a polymer obtained by polymerizing a precursor containing a compound having a urea group and an alkoxysilyl group, and separation membranes which have a separation layer made of a polymer obtained by polymerizing a precursor containing a compound having an amino group and an alkoxysilyl group are known (Patent Documents 2 and 3).

### PRIOR ART DOCUMENTS

### PATENT DOCUMENTS

Patent Document 1: JP-A 2020-151708
Patent Document 2: JP-A 2021-186712
Patent Document 3: JP-A 2022-21175

### SUMMARY OF INVENTION

### TECHNICAL PROBLEM

In Patent Document 1, pores are formed in the separation layer by doping metal ions. However, the pores that are formed are small in size and so the permeability of carbon dioxide, which has relatively large molecules, is low. In addition, forming uniform pores in the separation layer and enhancing the gas selectivity is difficult.

In separation membranes which use conventional organosilicon compounds having an amino group or a urea group as in Patent Documents 2 and 3, it has been difficult to achieve sufficient carbon dioxide permeability and CO₂/N₂ selectivity.

The present invention was arrived at in light of the above circumstances. An object of the invention is to provide a separation membrane which is capable of achieving high carbon dioxide permeability and gas selectivity.

### SOLUTION TO PROBLEM

The inventors have conducted intensive investigations aimed at achieving the above object. As a result, they have discovered that a separation membrane which has a separation layer containing a polymer having an isocyanurate skeleton and siloxane bonds and also containing metal ions exhibits a high carbon dioxide permeability and CO₂/N₂ selectivity. This discovery ultimately led to the present invention.

Accordingly, the invention provides:
1. A separation membrane comprising a separation layer which includes (A) a polymer having an isocyanurate skeleton and siloxane bonds and (B) metal ions, and which has an amorphous structure;
2. The separation membrane of 1 above, wherein component (A) is a polymer obtained by polymerizing a precursor containing a compound of general formula (1) below 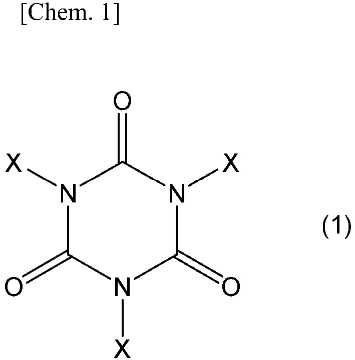 (wherein each X is independently a group of formula (2) below or a monovalent hydrocarbon group of 1 to 8 carbon atoms, with at least one occurrence of X being a group of formula (2) below 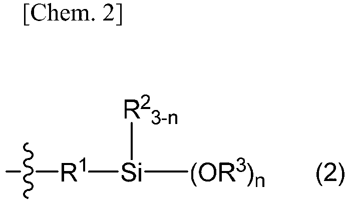 (wherein R¹ is an alkylene group of 1 to 8 carbon atoms, each R² is independently a monovalent hydrocarbon group of 1 to 8 carbon atoms, R³ is a hydrogen atom or an alkyl group of 1 to 4 carbon atoms, n is an integer from 1 to 3, and the straight line accompanied by a wavy line represents an atomic bond));
3. The separation membrane of 2 above, wherein component (A) is a polymer obtained by polymerizing a precursor containing tris[3-(trimethoxysilyl)propyl] isocyanurate;
4. The separation membrane of any of 1 to 3 above, wherein the metal in component (B) is one or more selected from the group consisting of nickel, copper, silver, cobalt and zinc;
5. A method for producing a separation membrane, which method includes the steps of:
   (I) preparing a metal-doped polymer sol containing (A) a polymer having an isocyanate skeleton and siloxane bonds and (B) metal ions,
   (II) coating the metal-doped polymer sol, either directly or over an intermediate layer, onto a porous substrate, and
   (III) baking the metal-doped polymer sol applied in the coating step to form a separation layer having an amorphous structure;
6. The separation membrane producing method of 5 above, wherein the metal-doped polymer sol preparation step is carried out by mixing a sol of the polymer (A) with a metal salt that supplies the metal ions (B);
7. The separation membrane producing method of 5 or 6 above, wherein component (A) is a polymer obtained by polymerizing a precursor containing a compound of general formula (1) below 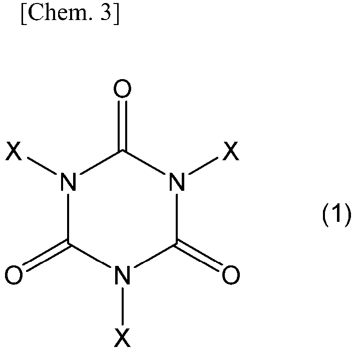 (wherein each X is independently a group of formula (2) below or a monovalent hydrocarbon group of 1 to 8 carbon atoms, with at least one occurrence of X being a group of formula (2) below 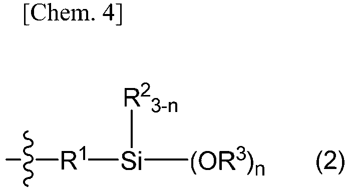 (wherein R¹ is an alkylene group of 1 to 8 carbon atoms, each R² is independently a monovalent hydrocarbon group of 1 to 8 carbon atoms, R³ is a hydrogen atom or an alkyl group of 1 to 4 carbon atoms, n is an integer from 1 to 3, and the straight line accompanied by a wavy line represents an atomic bond));
8. The separation membrane producing method of 7 above, wherein component (A) is a polymer obtained by polymerizing a precursor containing tris[3-(trimethoxysilyl)propyl] isocyanurate; and
9. The separation membrane producing method of any of 5 to 8 above, wherein the metal in component (B) is one or more selected from the group consisting of nickel, copper, silver, cobalt and zinc.

### ADVANTAGEOUS EFFECTS OF INVENTION

The separation membrane of the invention has excellent carbon dioxide permeability and gas selectivity, and therefore is useful in processes for the separation, recovery and storage of carbon dioxide from mixed gases and mixed organic solvents.

### BRIEF DESCRIPTION OF DRAWINGS

[FIG. 1] FIG. 1 is a schematic cross-sectional view showing an embodiment of the separation membrane according to the invention.
[FIG. 2] FIG. 2 presents diagrams illustrating properties of nickel-doped TTPI and TTPI, FIG. 2A showing the results of ultraviolet-visible spectroscopy, FIG. 2B showing the results of Fourier transform infrared spectroscopy (wavenumber, 500 to 2000 cm⁻¹) and FIGS. 2C and 2D showing the results of x-ray photoelectron spectroscopy.
[FIG. 3] FIG. 3 presents diagrams illustrating properties of nickel-doped TTPI powders and TTPI powder, FIG. 3A showing the results of x-ray diffractometry on powders baked at 250°C and FIG. 3B showing transmission electron micrographic images.
[FIG. 4] FIG. 4 shows N₂ adsorption-desorption isotherms for nickel-doped TTPI powders and TTPI powder.
[FIG. 5] FIG. 5 is a schematic diagram showing the mechanism of Ni-TTPI network formation at Ni/N molar ratios of 0, 0.25 and 0.50.
[FIG. 6] FIG. 6 is a graph showing CO₂ adsorption-desorption isotherms for nickel-doped TTPI powders and TTPI powder.
[FIG. 7] FIG. 7 is a diagram showing the permeability of separation membranes as a graph of the relationship between the size of the gas molecules and the gas permeance.

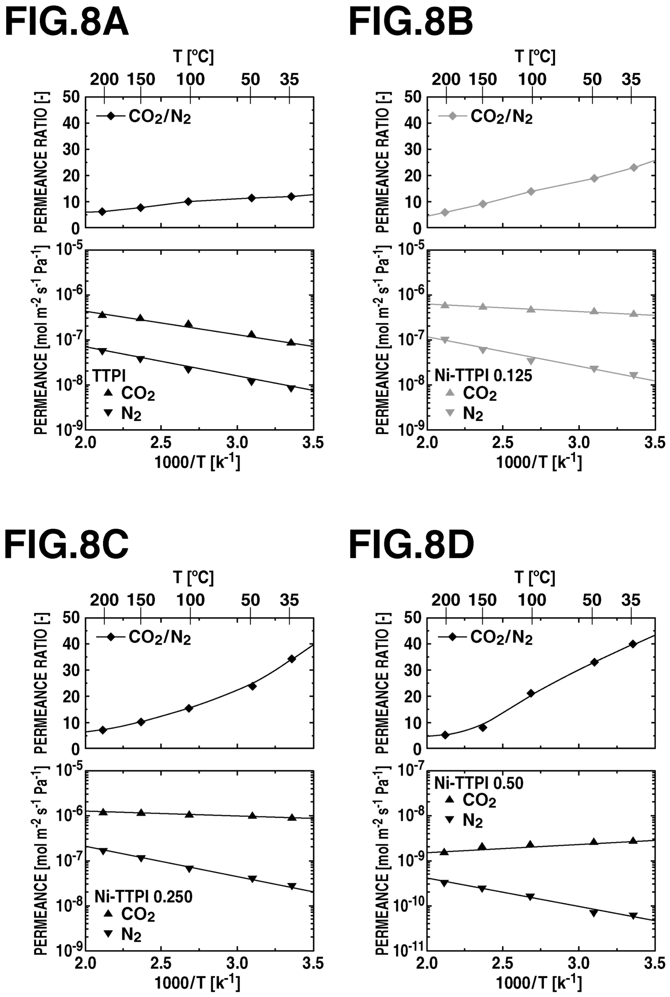

[FIG. 8] FIG. 8 presents diagrams showing the permeability of separation membranes, FIG. 8A being a graph of the temperature dependencies of the CO₂ and N₂ permeances and the CO₂/N₂ permeance ratio for the separation membrane obtained in Comparative Example 1, FIG. 8B being a graph of the temperature dependencies of the CO₂ and N₂ permeances and the CO₂/N₂ permeance ratio for the separation membrane obtained in Example 1, FIG. 8C being a graph of the temperature dependencies of the CO₂ and N₂ permeances and the CO₂/N₂ permeance ratio for the separation membrane obtained in Example 2, and FIG. 8D being a graph of the temperature dependencies of the CO₂ and N₂ permeances and the CO₂/N₂ permeance ratio for the separation membrane obtained in Example 3.

### DESCRIPTION OF EMBODIMENTS

The invention is described in detail below.

### (1) Separation Membrane

The separation membrane of the invention has a separation layer which includes (A) a polymer having an isocyanurate skeleton and siloxane bonds and (B) metal ions, and which has an amorphous structure. In this invention, "amorphous structure" refers to, as will be subsequently described, a state in which numerous pores consisting of network gaps within the separation layer have formed as a result of the formation of a network structure linked by siloxane bonds in the polymer and a network structure in which the nitrogen atoms within the isocyanurate skeleton and the metal ions are coordination bonded.

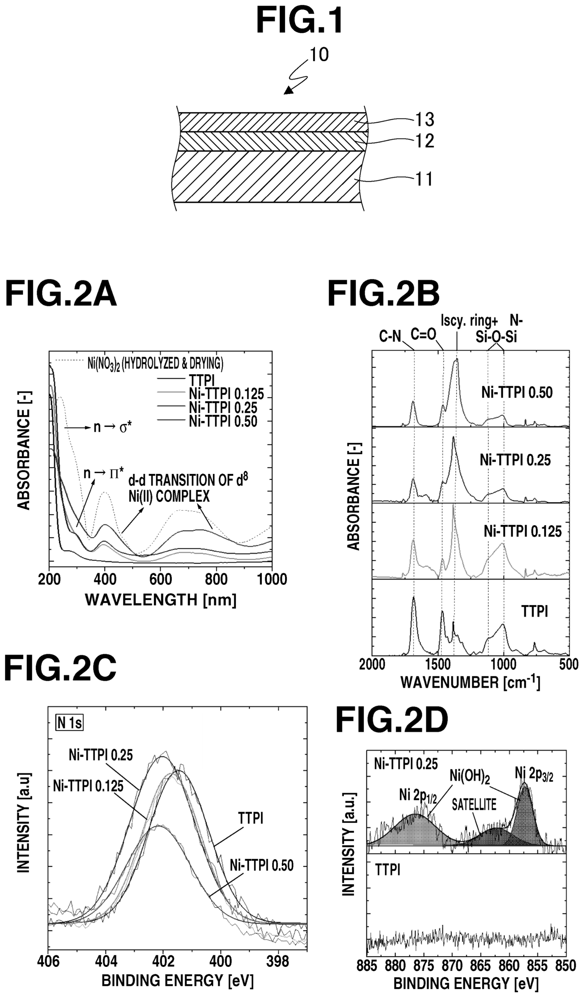

The structure of the separation membrane of the invention, which is not particularly limited so long as it has the aforementioned separation layer, is exemplified by the structure shown in FIG. 1. FIG. 1 is a schematic cross-sectional diagram of a separation membrane 10 according to one embodiment of the invention, the separation membrane 10 having a substrate 11, an intermediate layer formed on the substrate 11, and a separation layer 13 formed on the intermediate layer 12.

### (Substrate)

The separation membrane 10, in order to increase its mechanical strength and shape stability, preferably has a substrate 11. It is preferable for the substrate 11 to provide both a separation layer 13 supporting function and liquid permeability. Such a substrate is exemplified by a porous substrate.

Examples of the substrate material include, without particular limitation, ceramics such as α-alumina (Al₂O₃), silica (SiO₂) and zirconia (ZrO₂).

Nor is the shape of the substrate limited; examples include tubular, cylindrical and sheet-like shapes.

The average pore size of the porous substrate is not particularly limited, but is preferably 1 µm or less, and more preferably 100 nm or less. The average pore size of the porous substrate is preferably at least 0.1 nm, more preferably greater than 2 nm, even more preferably greater than 3 nm, and most preferably greater than 5 nm. A porous substrate with such an average pore size has both a separation layer-supporting function and liquid permeability, and moreover does not affect the CO₂ permeability and gas selectivity of the separation layer. In this invention, the average pore size is a value measured with a nanoperm porometer.

The thickness of the substrate is not particularly limited, although it is preferably from 0.5 to 5 mm, and more preferably from 1 to 3 mm.

### (Intermediate Layer)

The separation membrane 10 preferably has an intermediate layer 12 between the separation layer 13 and the substrate 11. The intermediate layer material is not particularly limited; examples include fine particles of a metal oxide such as alumina, silica, zirconia, or mixtures of these. The average particle size of the metal oxide particles is not particularly limited and may be selected from the known range in such manner as to enable pores of the desired average size to be formed.

The intermediate layer 12 can be formed by suitably applying and firing a colloidal sol containing these fine particles on the surface of the support 11. By furnishing such an intermediate layer, the surface of the substrate is made uniform, along with which the difference in thermal expansion coefficients between the substrate and the separation layer can be mitigated and the shape stability of the separation membrane can be increased.

The average pore size of the intermediate layer 12 is not particularly limited, although it is preferably smaller than the average pore size of the support 11 and larger than the average pore size of the separation layer 13. For example, the pore size is preferably from 0.5 to 5 nm, more preferably from 0.5 to 3 nm, and even more preferably from 1 to 2 nm.

The intermediate layer has a thickness which, although not particularly limited, is preferably from 1 to 1,000 nm.

In this embodiment, the intermediate layer is a single layer, but may instead consist of two or more layers. When the intermediate layer is formed of two or more layers, each may be made of the same material or may be made of different materials. It is also possible for no intermediate layer to be provided.

### (Separation Layer)

The separation layer 13 is formed, either directly or over an intermediate layer, on the substrate 11, and separates the target substance by means of pores which allow the target substance to pass through. The separation layer includes (A) a polymer having an isocyanurate skeleton and siloxane bonds and (B) metal ions, and has an amorphous structure. The metal ions included in the separation layer and nitrogen atoms from the isocyanurate skeleton in the polymer form coordinate bonds, with the metal ions serving as the electron acceptors and the nitrogen atoms serving as the electron donors. Carbon atoms, which have a smaller electronegativity than nitrogen atoms, bond to the nitrogen atoms serving as electron donors within the polymer having siloxane bonds, giving rise to a charge imbalance between the nitrogen atoms and the carbon atoms, and thus promoting the formation of coordinate bonds.

The separation layer 13 preferably forms a network structure linked by siloxane bonds (also referred to below as a "siloxane network") and a network structure in which the nitrogen atoms within the isocyanurate skeleton and the metal ions are coordination bonded (also referred to below as a "coordination bonded network"). By using a separation layer in which such a siloxane network and such a coordination bonded network have been formed, numerous pores through which CO₂ is selectively permeable can be formed, enabling a separation membrane having excellent CO₂ permeability and excellent CO₂/N₂ selectivity to be obtained.

### [Component (A)]

Component (A) is a polymer having an isocyanurate skeleton and siloxane bonds (also referred to below as "Polymer (A)").

Component (A) is not particularly limited so long as it is a polymer having the above structure. For example, a polymer obtained by polymerizing a precursor containing a compound of general formula (1) below (also referred to as "Compound (1)") is preferred. 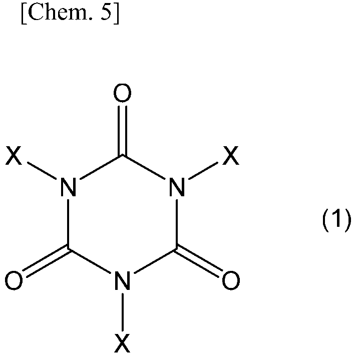 In the formula, each X is independently a group of formula (2) below or a monovalent hydrocarbon group of 1 to 8 carbon atoms, with at least one occurrence of X being a group of formula (2) below 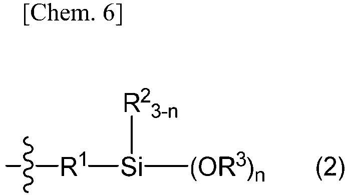 (wherein R¹ is an alkylene group of 1 to 8 carbon atoms, each R² is independently a monovalent hydrocarbon group of 1 to 8 carbon atoms, R³ is a hydrogen atom or an alkyl group of 1 to 4 carbon atoms, n is an integer from 1 to 3, and the straight line accompanied by a wavy line represents an atomic bond).

In formula (1), the monovalent hydrocarbon group of 1 to 8 carbon atoms represented by X may be linear, branched or cyclic. Specific examples include linear or branched alkyl groups such as methyl, ethyl, n-propyl, isopropyl, n-butyl, isobutyl, tert-butyl, neopentyl, n-hexyl, n-heptyl and n-octyl groups; cycloalkyl groups such as cyclopentyl and cyclohexyl groups; alkenyl groups such as vinyl, allyl, 3-butenyl, 5-hexenyl and 7-octenyl groups; and aryl groups such as the phenyl group. Of these, X is preferably a group of 1 to 3 carbon atoms, more preferably a vinyl group or allyl group, and even more preferably an allyl group.

At least one occurrence of X is a group represented by formula (2) above; all occurrences of X are preferably groups of formula (2).

In formula (2), specific examples of the alkylene group of 1 to 8 carbon atoms represented by R¹ include methylene, ethylene, trimethylene, propylene, tetramethylene, hexamethylene and octamethylene groups. Of these, R¹ is preferably an alkylene group of 2 or 3 carbon atoms, more preferably an alkylene group of 3 carbon atoms, and still more preferably a trimethylene group.

The monovalent hydrocarbon group of 1 to 8 carbon atoms represented by R² is exemplified by the same groups as those mentioned above for X. Of these, R² is preferably a group of 1 to 6 carbon atoms, and more preferably a methyl, vinyl or phenyl group.

The alkyl groups of 1 to 4 carbon atoms represented by R³ may be linear or branched groups. Specific examples include linear or branched alkyl groups such as methyl, ethyl, n-propyl, isopropyl, n-butyl, isobutyl and tert-butyl groups, Of these, R³ is preferably a methyl or ethyl group, and more preferably a methyl group.

The subscript n is an integer from 1 to 3, and is preferably 3.

Specific examples of Compound (1) include tris[3-(trimethoxysilyl)propyl] isocyanurate (TTPI), allylbis[3-(trimethoxysilyl)propyl] isocyanurate and diallyl[(3-trimethoxysilyl)propyl] isocyanurate. Of these, tris[3-(trimethoxysilyl)propyl] isocyanurate is preferred.

Compound (1) may be a single compound used alone, or two or more compounds may be used in combination.

The polymer of component (A) can be obtained by subjecting a precursor containing Compound (1) to hydrolytic condensation. The precursor may include, aside from Compound (1), a co-hydrolytically condensable compound within a range that does not detract from the advantageous effects of the invention. Such compounds are exemplified by silane compounds having a hydrolyzable group.

The silane compound having a hydrolyzable group is not particularly limited so long as it is a silane compound having, as hydrolyzable groups, from 1 to 4 chloro groups or alkoxy groups on the silicon atom.

Specific examples include tetrachlorosilane, tetramethoxysilane, tetraethoxysilane, tetraisopropoxysilane, tetrabutoxysilane, methyltrichlorosilane, methyltrimethoxysilane, methyltriethoxysilane, methyltriisopropoxysilane, methyltributoxysilane, dimethyldimethoxysilane, dimethyldiethoxysilane, dimethyldiisopropoxysilane, trimethylchlorosilane, trimethylmethoxysilane, trimethylethoxysilane, trimethylisopropoxysilane, ethyltrichlorosilane, ethyltrimethoxysilane, ethyltriethoxysilane, propyltrichlorosilane, propyltrimethoxysilane, propyltriethoxysilane, butyltrichlorosilane, butyltrimethoxysilane, butyltriethoxysilane, hexyltrichlorosilane, hexyltrimethoxysilane, hexyltriethoxysilane, phenyltrichlorosilane, phenyltrimethoxysilane, phenyltriethoxysilane, cyclohexyltrichlorosilane, cyclohexyltrimethoxysilane, cyclohexyltriethoxysilane, propylmethyldichlorosilane, propylmethyldimethoxysilane, propylmethyldiethoxysilane, hexylmethyldichlorosilane, hexylmethyldimethoxysilane, hexylmethyldiethoxysilane, phenylmethyldichlorosilane, phenylmethyldimethoxysilane, phenylmethyldiethoxysilane, diphenyldichlorosilane, diphenyldimethoxysilane, diphenyldiethoxysilane, dimethylphenylchlorosilane, dimethylphenylmethoxysilane, dimethylphenylethoxysilane and partial hydroxylates of these. From the standpoint of the handleability, ease of distilling off by-products and availability of the starting materials, methoxysilane and ethoxysilane are preferred.

The silane compound may be of one type used alone, or two or more types may be used in combination.

Compound (1) accounts for preferably at least 90 mol%, more preferably at least 95 mol%, and even more preferably 100 mol%, of the total number of moles of the precursor.

### [Component (B)]

Component (B) is a metal ion, the metal being exemplified by nickel, copper, silver, cobalt and zinc (the metal ions being, for example, Ni²⁺, Cu²⁺, Ag⁺, Co²⁺ and Zn²⁺). One of these metals may be used alone, or two or more may be used in combination. Of these, nickel is preferred.

From the standpoint of the CO₂/N₂ selectivity of the separation membrane, the molar ratio of (B) metal ions with respect to nitrogen atoms from the isocyanurate skeleton in the polymer (A) within the separation layer (metal ions/nitrogen atoms) is preferably at least 0.01 and not more than 0.75, more preferably at least 0.10 and not more than 0.60, and even more preferably at least 0.125 and not more than 0.50. For the separation membrane to have also a good CO₂ permeability, this ratio is most preferably at least 0.125 and not more than 0.25.

The average pore size of the separation layer is not particularly limited, although it is preferably smaller than the average pore size of the intermediate layer. For example, the average pore size is preferably less than 1 nm, and more preferably less than 0.5 nm. Although the average pore size has no particular lower limit, it is preferably at least 0.1 nm.

The separation layer has a thickness which is preferably at least 100 nm and not more than 1,000 nm. At a separation layer thickness of 1,000 nm or less, CO₂ separation does not take a long time or require high pressure, resulting in an excellent separation efficiency. At a separation layer thickness of 100 nm or more, the passage of gases other than CO₂ can be suppressed, further enhancing the CO₂ selectivity.

### (2) Method for Producing Separation Membrane

A method for producing the separation membrane of the invention is described below. The method for producing the inventive separation membrane, although not particularly limited so long as the above-described separation membrane having a separation layer can be obtained, is exemplified by a method which includes the following steps:
(I) preparing a metal-doped polymer sol containing (A) a polymer having an isocyanate skeleton and siloxane bonds and (B) metal ions,
(II) coating the metal-doped polymer sol, either directly or over an intermediate layer, onto a porous substrate, and
(III) baking the metal-doped polymer sol applied in the coating step to form a separation layer having an amorphous structure.

### Step (I): Preparation of Metal-Doped Polymer Sol

This is a step which prepares a metal-doped polymer sol containing (A) a polymer having an isocyanate skeleton and siloxane bonds and (B) metal ions.

The metal-doped polymer sol can be obtained by mixing a sol of (A) the polymer having an isocyanurate skeleton and siloxane bonds with a metal salt that supplies (B) the metal ions.

The sol of Polymer (A) is preferably obtained by hydrolytically condensing a precursor containing Compound (1). In this case, after first carrying out hydrolytic condensation and synthesizing Polymer (A), the resulting Polymer (A) may be dispersed in a solvent to prepare a sol of Polymer (A) or the Polymer (A)-containing sol following completion of the hydrolytic condensation reaction may be used directly as is. In this invention, it is preferable to use the Polymer (A)-containing sol following completion of the hydrolytic condensation reaction directly as is.

A hydrolysis catalyst may be used when carrying out hydrolytic condensation. A known catalyst may be used as the hydrolysis catalyst, in which case one whose aqueous solutions exhibit an acidic pH of 2 to 7 (acidic catalyst) is preferred. Acidic hydrogen halides, sulfonic acids, carboxylic acids, acidic or weakly acidic inorganic salts, and solid acids such as ion exchange resins are especially preferred.

Specific examples of acidic catalysts include hydrogen fluoride, hydrochloric acid, nitric acid, sulfuric acid, methanesulfonic acid, p-toluenesulfonic acid, formic acid, acetic acid, maleic acid, benzoic acid, lactic acid, phosphoric acid, and cationic exchange resins having sulfonic acid or carboxylic acid groups on the surface.

The amount of hydrolysis catalyst used is not particularly limited, although in order to have the reaction proceed rapidly and also taking into consideration the ease of removing the catalyst following the reaction, the amount of catalyst used is preferably from 0.0002 to 0.5 mole per mole of silicon atoms in the precursor.

The amount of water required for the hydrolytic condensation reaction is not particularly limited. However, to prevent catalyst deactivation and fully promote the reaction, the amount of water per mole of silicon atoms in the precursor is preferably from 0.1 to 200 moles.

The reaction temperature at the time of hydrolytic condensation is not particularly limited. However to enhance the conversion ratio and also prevent degradation of the organic functional groups, the temperature is preferably between -10°C and 150°C. The reaction time, although not particularly limited, is preferably from 0.5 to 24 hours.

An organic solvent may be used at the time of hydrolytic condensation. Specific examples of organic solvents that can be used include methanol, ethanol, propanol, acetone, methyl ethyl ketone, methyl isobutyl ketone, tetrahydrofuran, toluene and xylene.

Next, a metal-doped polymer sol is prepared by adding a metal salt to the resulting sol of Polymer (A) and stirring.

The metal salt may be one that supplies the metal ions serving as component (B). Specific examples include Ni(NO₃)₂·6H₂O, AgNO₃, Cu(NO₃)₂·3H₂O, Co(NO₃)₂·6H₂O and Zn(NO₃)₂·6H₂O. Of these, Ni(NO₃)₂·6H₂O is preferred.

The metal salt is added in an amount such that the molar ratio of the metal ions (B) to nitrogen atoms from the isocyanurate skeleton in Polymer (A) (metal ions/nitrogen atoms) falls within the above-described range.

From the standpoint of efficiently creating a uniform separation layer, the concentration of metal-doped polymer in the metal-doped polymer sol is preferably from 0.1 to 0.5 wt%.

In cases where an intermediate layer is provided in the separation membrane of the invention, an intermediate layer-forming step may be carried out after the metal-doped polymer sol preparation step or may be carried out before the metal-doped polymer sol preparation step. Alternatively, the metal-doped polymer sol preparation step and the intermediate layer-forming step may be carried out in parallel.

The intermediate layer-forming step is exemplified by a method which involves coating the surface of a substrate 11 with a SiO₂-ZrO₂ sol in which α-alumina particles have been mixed and firing the sol so as to form a first intermediate layer, then coating SiO₂-ZrO₂ sol onto the first intermediate layer and firing the applied sol so as to form a second intermediate layer, thereby forming an intermediate layer 12 on the substrate 11.

The firing conditions in the intermediate layer-forming step are preferably a firing temperature of between 400°C and 600°C, preferably between 400°C and 500°C, and a firing time of from 10 to 30 minutes in open air.

### Step (II): Coating Step

This is a step which coats the metal-doped polymer sol obtained in Step (I), either directly or over an intermediate layer, onto a porous substrate.

The coating method and coating amount are not particularly limited. The coating method may be suitably selected from known methods such as dipping and brush coating. It is preferable to carry out coating to the desired thickness.

### Step (III): Baking Step

This is a step which bakes the metal-doped polymer sol that was applied in the coating step, thereby forming the separation layer.

Baking is preferably carried out in a nitrogen, argon or other inert gas atmosphere, at a baking temperature of between 200°C and 400°C, and for a baking time of from 30 to 60 minutes. Within these ranges, the CO₂ permeability and CO₂/N₂ selectivity of the separation membrane can be further increased.

### EXAMPLES

Synthesis Examples, Comparative Synthesis Examples, Examples of the invention and Comparative Examples are given below by way of illustration, although the invention is not limited by these Examples.

### [Synthesis Examples 1 to 3, Comparative Synthesis Example 1]

### Step (1):

Water and nitric acid were added to TTPI (KBM-9659, from Shin-Etsu Chemical Co., Ltd.) dissolved in ethanol, effecting hydrolysis and condensation reactions on the TTPI. The molar ratio at this was time was TTPI/H₂O/HNO₃ = 1/300/1. The reaction mixture was then stirred at 25°C for 12 hours, thereby preparing a sol of the TTPI hydrolytic condensation product (TTPI sol). The TTPI sol concentration was adjusted to 5 wt% using ethanol.

Next, the metal salt Ni(NO₃)₂·6H₂O (Sigma Aldrich Co., Ltd.) was added to the TTPI sol obtained as described above and the mixture was stirred, thereby preparing a nickel-doped TTPI sol (Ni-TTPI). The Ni-TTPI concentration was set to 0.1 wt% using deionized water.

At this time, nickel-doped TTPI sols in which the molar ratio of nickel to the nitrogen atoms in TPPI (Ni/N) was set to respectively 0.125 (Ni-TPPI 0.125: Synthesis Example 1), 0.25 (Ni-TPPI 0.25: Synthesis Example 2) and 0.50 (Ni-TPPI 0.50: Synthesis Example 3) were prepared. In addition, a metal salt-free TPPI sol (TTPI: Comparative Synthesis Example 1) was prepared by diluting the TPPI sol obtained in Step (I) above to 0.1 wt% using deionized water.

### (Properties of Nickel-Doped TTPI Sols)

FIG. 2A shows the measurement results of ultraviolet visible spectroscopy (UV-Vis) for the nickel-doped TTPI sols obtained in Synthesis Examples 1 to 3, the TTPI sol obtained in Comparative Synthesis Example 1, and Ni(NO₃)₂·6H₂O. The UV-Vis measurements were carried out using the UV-3600 Plus ultraviolet-visible-near infrared spectrophotometer from Shimadzu Corporation.

For the nickel-doped TTPI sols and the TTPI sol, a peak at 200 to 212 nm indicating the intraligand transition (n→σ*) of electrons held by amino groups was detected. In the nickel-doped TTPI sols, two peaks were detected at 400 nm and 600 nm. As the nickel ratio becomes higher, the two peaks at 400 nm and 600 nm shifted toward the high wavelength side due to changes in the state of free electrons on the amino groups.

FIG. 2B shows measurement results obtained by Fourier transform infrared spectroscopy (FT-IR) (wavenumber, 500 to 2000 cm⁻¹). The nickel-doped TTPI sols obtained in Synthesis Examples 1 to 3 and the TTPI sol obtained in Comparative Synthesis Example 1 were each coated onto a KBr plate and baked at 250°C in an N₂ atmosphere, following which measurement was carried out using an FT/IR-4100 Fourier transform infrared spectrophotometer (JASCO Corporation).

The isocyanurate skeleton exhibits peaks at a wavenumber of 1550 to 1650 cm⁻¹. As the amount of nickel doping increases, the peak at 1610 to 1620 cm⁻¹ widens and the intensity becomes larger. This appears to be attributable to the fact that coordination bonding between the amino group and the metal ion was promoted by the TTPI hydrolysis and condensation reactions.

FIGS. 2C and 2D show the results of x-ray photoelectron spectroscopy (XPS). The nickel-doped TTPI sols obtained in Synthesis Examples 1 to 3 and the TTPI sol obtained in Comparative Synthesis Example 1 were each coated onto silicon wafers, baked at 250°C, and then measured using an x-ray photoelectron spectrometer (ESCA 3400-HSE, from Shimadzu Corporation).

As shown in FIG. 2C, the N (1s) bond energy peak shifts due to nickel doping. The increase in bond energy is thought to be attributable to nitrogen, which is a coordinate bond-forming electron donor.

In the Ni (2p) bond energy shown in FIG. 2D, the two peaks at 874 eV and 857 eV, observed in the nickel-doped TPPI (Ni-TPPI 0.25) containing nitrogen atoms that form coordinate bonds with nickel are thought to be attributable to the presence of Ni-OH.

The measurement results obtained by UV-Vis, FT-IR and XPS spectroscopy demonstrate that coordinate bonds have formed between the isocyanurate skeleton and nickel ions in the nickel-doped TTPI sols at each of the nickel ratios.

### (Properties of Nickel-Doped TTPI Powders)

The nickel-doped TTPI sols obtained in Synthesis Examples 1 to 3 and the TTPI sol obtained in Comparative Synthesis Example 1 were dried at 180°C, pulverized and rendered into a powder, then baked at 250°C for 30 minutes in a nitrogen atmosphere. The properties of the powders thus formed were evaluated based on x-ray diffraction analysis (XRD) and transmission electron microscopic (TEM) images.

XRD analysis was carried out using an XRD D2 Phaser (from Bruker Corporation). The transmission electron microscope used was the JEOL 2010 TEM (from JEOL, Ltd.).

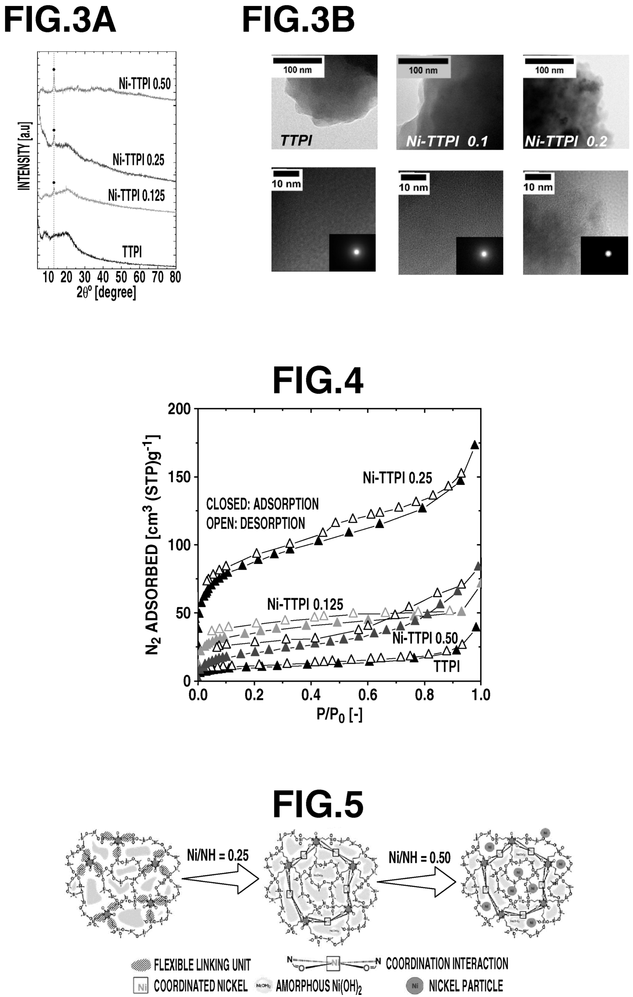

FIG. 3A shows the measurement results obtained by XRD for baked nickel-doped TTPI powders and baked TTPI powder. At a 20 angle, characteristic broad peaks attributable to a siloxane network (Si-O-Si) were observed at 8° and 20°. In the nickel-doped TTPI powder, a Ni(OH)₂ peak was observed at 15°.

As the Ni/N molar ratio becomes higher, the first peak at 8° shifts lower and the second peak at 20° becomes broader, indicating that a more amorphous structure has formed.

FIG. 3B shows TEM images of baked nickel-doped TTPI powders and TTPI powder. The top row are low-resolution TEM images and the bottom row are high-resolution TEM images. When the nickel ratio was 0.25 or more, the nickel was not uniformly distributed and many black dots indicating non-coordinating nickel which has not formed coordinate bonds with amino groups were confirmed.

FIG. 4 shows N₂ adsorption isotherms (-196°C) for baked nickel-doped TTPI powders and TTPI powder. Measurement was carried out using the BELMAX (from BEL Japan, Inc.). Table 1 shows the results obtained by computing the BET (Brunauer-Emmett-Teller) specific surface area and the total pore volume from the N₂ adsorption isotherm.

**[Table 1]**

| Sample | Ni/N mole ratio (mol mol⁻¹) | Surface area (m² g⁻¹) | Pore volume (cm³ g⁻¹) |
|---|---|---|---|
| TTPI | 0 | 30.1 | 0.059 |
| Ni-TTPI 0.125 | 0.125 | 93.6 | 0.106 |
| Ni-TTPI 0.25 | 0.25 | 308 | 0.268 |
| Ni-TTPI 0.50 | 0.50 | 69.2 | 0.128 |

As shown in Table 1, the nickel-doped TTPI powders have larger BET specific surface areas and larger total pore volumes than the TTPI powder. In these metal-doped TTPI powders, pores form due to coordinate bonds between the amino groups within the TTPI molecule serving as the electron donors and the metal ions serving as the electron acceptors.

The BET specific surface area and total pore volume were largest in the case of the Ni-TTPI 0.25 powder; both the surface area and the pore volume decreased upon further increasing the Ni/N ratio to 0.5. The reason is thought to be that surplus nickel which does not form coordinate bonds with TTPI agglomerates, forming nanoparticles which block the pore structure. FIG. 5 schematically shows the mechanism of Ni-TTPI network formation at Ni/N molar ratios of 0, 0.25 and 0.50.

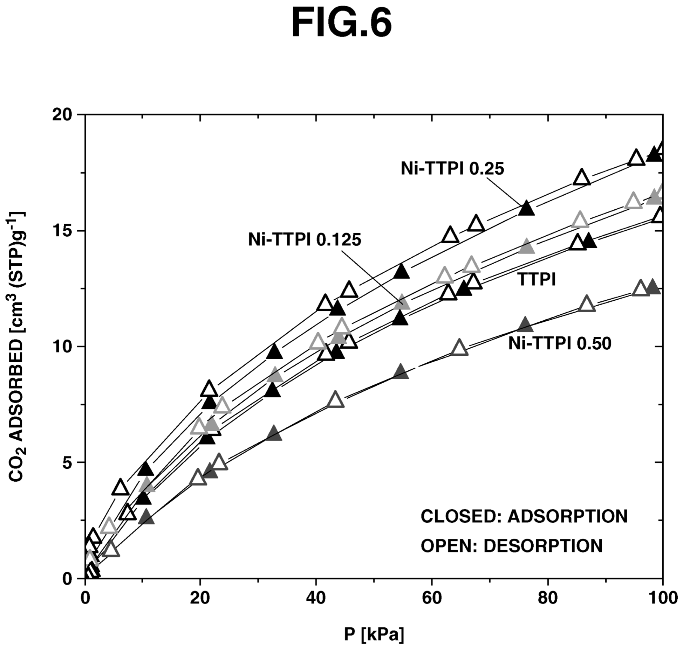

FIG. 6 shows CO₂ adsorption isotherms for baked nickel-doped TTPI powders and TTPI powder. Ni-TTPI 0.25 samples showed higher CO₂ adsorptivity than TPPI and low-concentration nickel-doped powder. On the other hand, under similar conditions, the pores in Ni-TTPI 0.50 are blocked by uncoordinated nickel particles, resulting in a low CO₂ adsorptivity.

### [Example 1]

### (Intermediate Layer-Forming Step)

An α-alumina tube (from Nikkato Corporation; length, 100 mm; inside diameter, 8 mm; outside diameter, 10 mm) was used as the porous substrate.

A dispersion obtained by mixing together α-alumina fine particles having a number average particle diameter of 0.2 µm, α-alumina fine particles having a number average particle diameter of 2 µm and a SiO₂-ZrO₂ sol (number average particle diameter: approx. 10 nm, 2.0 wt%) and diluting to 10 wt% with deionized water was coated onto the outside surface of the porous substrate and air-dried, following which excess particles were wiped off and 15 minutes of firing at 550°C in open air was carried out. Coating and firing of the dispersion were repeated three times, thereby forming the first intermediate layer.

A SiO₂-ZrO₂ sol (number average particle diameter: approx. 10 nm, 0.5 wt%) was then coated onto the first intermediate layer and fired for 10 minutes at 550°C in open air. By repeatedly applying and firing the SiO₂-ZrO₂ sol until the average pore size as measured with a nanoperm porometer was at least 1 nm and not more than 2 nm, a second intermediate layer was formed, in this way successively forming a first and second intermediate layer on the outside surface of the support.

### Step (II):

Next, as the coating step, the 0.1 wt% nickel-doped TTPI sol obtained in Synthesis Example 1 (Ni-TPPI 0.125) was coated onto the second intermediate layer.

### Step (III):

Next, as the baking step, the nickel-doped TTPI sol that was coated in above Step (II) onto the second intermediate layer formed on the support was baked at 250°C for 30 minutes, thereby forming a separation layer and producing a separation membrane.

### [Example 2]

Other than changing, in Step (II), the 0.1 wt% nickel-doped TTPI sol obtained in Synthesis Example 1 to the 0.1 wt% nickel-doped TTPI sol obtained in Synthesis Example 2 (Ni-TPPI 0.25), a separation membrane was produced in the same way as in Example 1.

### [Example 3]

Other than changing, in Step (II), the 0.1 wt% nickel-doped TTPI sol obtained in Synthesis Example 1 to the 0.1 wt% nickel-doped TTPI sol obtained in Synthesis Example 3 (Ni-TPPI 0.50), a separation membrane was produced in the same way as in Example 1.

### [Comparative Example 1]

Other than changing, in Step (II), the 0.1 wt% nickel-doped TTPI sol obtained in Synthesis Example 1 to the 0.1 wt% TTPI sol obtained in Comparative Synthesis Example 1 (TPPI), a separation membrane was produced in the same way as in Example 1.

Permeability evaluations on the separation membranes obtained in Examples 1 to 3 and Comparative Example 1 were carried out for helium, hydrogen, carbon dioxide, nitrogen, methane, carbon tetrafluoride and sulfur hexafluoride. The gas to be passed through the membrane was supplied at a pressure of from 200 to 400 kPa from the separation layer side of the separation membrane (the separation layer 13 side in FIG. 1) and the permeability at 200°C was evaluated. The permeation flow rate was measured using a film flowmeter (Horiba, Ltd.).

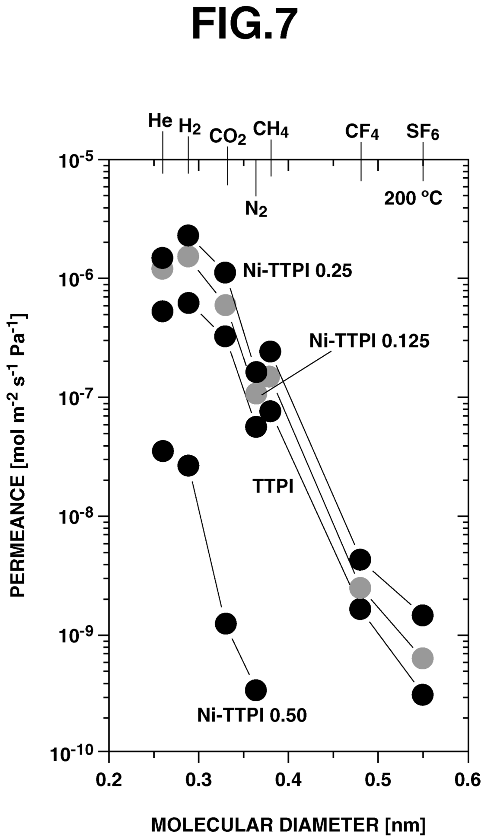

FIG. 7 shows the relationship between the size of the gas molecules and the gas permeance. As the molecular size of the gas to be passed through becomes larger, the permeance decreases. Hence, gas separation by the separation membranes obtained in Examples 1 to 3 is thought to take place by way of molecular sieving.

Because the separation membrane using Ni-TTPI 0.25 (Example 2) is more porous than the separation membrane using TPPI (Comparative Example 1) and the separation membrane using Ni-TTPI 0.125 (Example 1), the gas permeability is higher. On the other hand, when Ni-TTPI 0.50 was used (Example 3), the gas permeance was low, indicating a denser membrane structure due to occlusion of the pores by nickel particles. This agreed with the above-mentioned CO₂ adsorption results for Ni-TTPI particles.

In FIG. 8, the CO₂ and N₂ gas permeabilities and the CO₂/N₂ permeance ratios of the separation membranes obtained in Examples 1 to 3 and Comparative Example 1 exhibit temperature dependence. FIGS. 8A to 8D show the results for the separation membranes obtained in, respectively, Comparative Example 1 and Examples 1 to 3.

In each of the separation membranes, a higher measurement temperature T, i.e., a lower reciprocal (1/T) of the measurement temperature T, is associated with a higher N₂ permeance. This is presumably because (1) vibration of the siloxane network of the separation membrane due to heat causes the pore size of the separation membrane to become larger, and (2) the diffusion of N₂ molecules is promoted by an increase in the kinetic energy of the N₂ molecules. The gas permeation mechanism whereby the permeance rises at a higher measurement temperature T in this way is called "activated diffusion."

As for CO₂, the higher the Ni/N molar ratio in the Ni-TTPI separation layer, the higher the CO₂ permeance at low temperature. This is presumably because the gas permeation mechanism called "surface diffusion" dominates.

In surface diffusion, due to the adsorption of CO₂ molecules to the surface of the CO₂ separation membrane, a CO₂ concentration gradient from the upstream side of the separation membrane toward the downstream side arises and molecules move two-dimensionally along this concentration gradient. The lower the measurement temperature T, the lower the energy possessed by the CO₂ molecules; because the CO₂ molecules more readily adsorb to the surface of the separation membrane, diffusive movement that arises in accordance with this concentration gradient is promoted. Therefore, in surface diffusion, the permeance decreases as the measurement temperature T becomes higher.

The CO₂/N₂ transmission selectivity of the separation membranes obtained in Examples 1 to 3 greatly improves as one goes from a high temperature to a lower temperature. The reason is presumably as follows. The gas permeation mechanism for N₂ is activated diffusion, in which the permeance becomes lower with decreasing temperature. By contrast, in the gas permeation mechanism for CO₂ at a Ni-TPPI separation layer, reversible physical adsorption of amine-CO₂ arises more readily due to an increase in nickel ligands relative to the amines in the isocyanurate skeleton. The result is a larger contribution by surface diffusion, for which the permeance rises as the temperature becomes lower.

The invention is not limited to the embodiments described above, various modifications being possible within the scope of the claims. Embodiments arrived at by the suitable combination of technical means separately disclosed in different embodiments also are encompassed by the technical scope of the invention.

### REFERENCE SIGNS LIST

- 10: Separation membrane
- 11: Substrate
- 12: Intermediate layer
- 13: Separation layer

## Claims

1. A separation membrane comprising a separation layer which includes (A) a polymer having an isocyanurate skeleton and siloxane bonds and (B) metal ions, and which has an amorphous structure.

2. The separation membrane of claim 1, wherein component (A) is a polymer obtained by polymerizing a precursor containing a compound of general formula (1) below 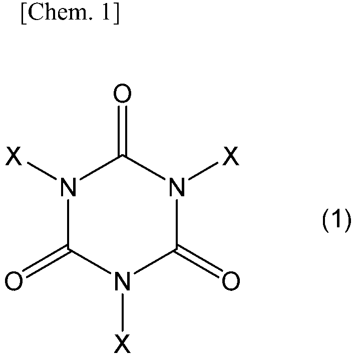 (wherein each X is independently a group of formula (2) below or a monovalent hydrocarbon group of 1 to 8 carbon atoms, with at least one occurrence of X being a group of formula (2) below 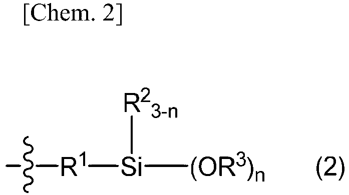 (wherein R¹ is an alkylene group of 1 to 8 carbon atoms, each R² is independently a monovalent hydrocarbon group of 1 to 8 carbon atoms, R³ is a hydrogen atom or an alkyl group of 1 to 4 carbon atoms, n is an integer from 1 to 3, and the straight line accompanied by a wavy line represents an atomic bond)).

3. The separation membrane of claim 2, wherein component (A) is a polymer obtained by polymerizing a precursor containing tris[3-(trimethoxysilyl)propyl] isocyanurate.

4. The separation membrane of any one of claims 1 to 3, wherein the metal in component (B) is one or more selected from the group consisting of nickel, copper, silver, cobalt and zinc.

5. A method for producing a separation membrane, comprising the steps of:
(I) preparing a metal-doped polymer sol containing (A) a polymer having an isocyanate skeleton and siloxane bonds and (B) metal ions,
(II) coating the metal-doped polymer sol, either directly or over an intermediate layer, onto a porous substrate, and
(III) baking the metal-doped polymer sol applied in the coating step to form a separation layer having an amorphous structure.

6. The separation membrane producing method of claim 5, wherein the metal-doped polymer sol preparation step is carried out by mixing a sol of the polymer (A) with a metal salt that supplies the metal ions (B).

7. The separation membrane producing method of claim 5 or 6, wherein component (A) is a polymer obtained by polymerizing a precursor containing a compound of general formula (1) below 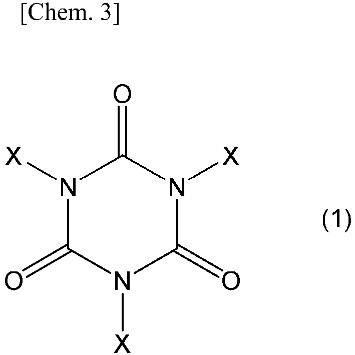 (wherein each X is independently a group of formula (2) below or a monovalent hydrocarbon group of 1 to 8 carbon atoms, with at least one occurrence of X being a group of formula (2) below 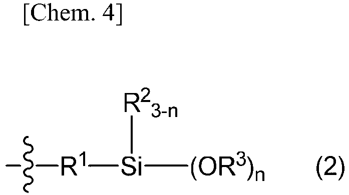 (wherein R¹ is an alkylene group of 1 to 8 carbon atoms, each R² is independently a monovalent hydrocarbon group of 1 to 8 carbon atoms, R³ is a hydrogen atom or an alkyl group of 1 to 4 carbon atoms, n is an integer from 1 to 3, and the straight line accompanied by a wavy line represents an atomic bond)).

8. The separation membrane producing method of claim 7, wherein component (A) is a polymer obtained by polymerizing a precursor containing tris[3-(trimethoxysilyl)propyl] isocyanurate.

9. The separation membrane producing method of any one of claims 5 to 8, wherein the metal in component (B) is one or more selected from the group consisting of nickel, copper, silver, cobalt and zinc.
